# EUROPEAN PATENT APPLICATION

(11) **EP 4 715 513 A1**
(43) Date of publication of application: **25.03.2026**
(21) Application number: 25191321.6
(22) Date of filing: 23.07.2025
(51) Int. Cl.: G05D 1/648, A01B 69/00, G05D 105/15, G05D 107/20, G05D 109/10

(54) **ROUTE PLANNING FOR AN AGRICULTURAL VEHICLE**

(30) Priority: 23.09.2024 GB 202413984
(71) Applicant: AGCO International GmbH, 8212 Neuhausen am Rheinfall (CH)
(72) Inventor: Thullner, Astrid, 87616 Marktoberdorf (DE); LAUSDAHL, Kenneth, DK8900 Randers (DK); Thullner, Christian, 87616 Marktoberdorf (DE); Laesser, Stefanie, 87616 Marktoberdorf (DE); MUFF-MUELLER, Daniel, 87616 Marktoberdorf (DE); NILSSON, Rene, DK8900 Randers (DK)
(74) Representative: AGCO Intellectual Property Department

(57) **Abstract**

A mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to at least boundary information and a plurality of center lines generated based on identified pairs of parallel tramlines.

## Description

### CROSS-REFERENCE TO RELATED APPLICATIONS

N/A.

### FIELD

Embodiments of the present disclosure relate to agricultural vehicles, and in particular to route planning for agricultural vehicles.

### BACKGROUND

With ever-increasing population numbers and ongoing interest in more environmentally friendly farming practices, there is a desire to improve the efficiency of performing agricultural processes. Examples of agricultural processes include ploughing, planting, spraying, fertilizing, harvesting and so on. Each of these activities plays a distinct role in the overall agricultural production cycle and their efficiency directly impacts the productivity and sustainability of farming operations.

One of the identified areas for improving agricultural efficiency is the route or path taken by an agricultural vehicle during the performance of these processes. Several factors are considered when planning a route for an agricultural vehicle, such as minimizing fuel consumption, decreasing soil compression, and expanding the area available for crop cultivation, e.g., by reducing the number of vehicle tracks in the treated region.

Typically, route planning techniques make use of a known boundary of a region to undergo the agricultural process (e.g., a field). The objective of the generated route is to define a path by which the vehicle can perform the agricultural process over the entirety of this region in the most efficient manner possible, e.g., taking the above considerations into account.

### BRIEF SUMMARY

According to examples in accordance with this disclosure, there is provided a computer-implemented method for generating a recommended route for an agricultural vehicle to perform an agricultural process within a predetermined region bound by a boundary.

The computer-implemented method comprises: obtaining, by a guidance control system, boundary information defining the predetermined region; obtaining, by the guidance control system, tramline information defining the locations of a plurality of tramlines present in the predetermined region, wherein the plurality of tramlines comprises a plurality of pairs of parallel tramlines; processing, by the guidance control system, the tramline information to identify the plurality of pairs of parallel tramlines; generating, by the guidance control system, a plurality of center lines, each center line being a line in the center of, and parallel to, a different one of the plurality of pairs of parallel tramlines respectively; generating, by the guidance control system, a recommended route for movement of the agricultural vehicle within the predetermined region by processing at least the boundary information and the plurality of center lines; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

The present disclosure thereby provides a mechanism for determining a recommended route for an agricultural vehicle in advance of performing an agricultural procedure or process (e.g., a harvesting procedure). The recommended route is generated based on boundary information and a plurality of center lines which themselves have been generated based on identified pairs of parallel tramlines (i.e., made during a previous agricultural process within the predetermined region).

For example, by obtaining and using tramline information, center lines can be efficiently generated based on said tramline information, essentially recreating a substantial portion of the path of a past agricultural vehicle which planted/seeded in the predetermined region (e.g., a field) and thus left behind the tramlines. Said center lines can then be used to help efficiently generate an effective recommended route, e.g., for an agricultural process involving said planted/seeded plants. Information is thus efficiently used in order to generate an effective recommended route for movement of an agricultural vehicle.

The present disclosure also proposes to track the adherence of the agricultural vehicle to the recommended route when performing the agricultural process. The route is updated responsive to a deviation of the agricultural vehicle from the recommended route, to thereby provide an adaptive approach that directly responds to a physical operation or position of the agricultural vehicle.

In some examples, generating the recommended route comprises: grouping the plurality of center lines into a plurality of groups based on at least one of: an orientation of the center lines; and a spacing between the lines; and generating a guidance pattern for each of the plurality of groups such that a plurality of guidance patterns are generated; and generating the recommended route by processing at least the boundary information and the plurality of guidance patterns. This provides a way to essentially compress and simplify the information contained in the plurality of center lines while still allowing the effective and efficient generation of the recommended route.

In some examples, a guidance pattern comprises: a line length; a line orientation; a line spacing; a spacing direction; and a number of replications. This provides an effective set of information to essentially facilitate recreation of the original center lines.

In some examples, grouping the plurality of center lines comprises grouping the plurality of center lines into a plurality of groups such that each group consists of a single center line or a plurality of center lines which are parallel to one another and have a substantially constant spacing between them. This allows groups to be made which include either center lines which can be effectively simplified and compressed into a guidance pattern or a single center line which cannot be effectively compressed into a guidance pattern with any others.

In some examples, the method further comprises: generating, by the guidance control system, a plurality of connecting segments for connecting the generated plurality of center lines together; and wherein generating the recommended route is performed by further processing the plurality of connecting segments. This provides an effective way for essentially converting the plurality of center lines into a continuous recommended route.

In some examples, each of the plurality of connecting segments comprise a smooth curved segment. Smooth curved segments provide effective connecting segments which agricultural vehicles can effectively and easily follow.

In some examples, obtaining the tramline information comprises generating the tramline information, by the guidance control system, based on georeferenced data defining a route taken by a past agricultural vehicle. This approach provides an effective and reliable way to obtain the tramline information.

In some examples, the route taken by the past agricultural vehicle is a route of the past agricultural vehicle which resulted in the formation of the plurality of tramlines. This approach thus facilitates an efficient, reliable and time-saving way to automatically obtain the tramline information by using data from, for example, a planting/seeding operation performed by an agricultural vehicle in the past which resulted in the formation of the tramlines.

In some examples, the computer-implemented method further comprises controlling an output user interface to provide a visual representation of the recommended route. This provides an operator of the agricultural vehicle with information on the recommended route. It will be appreciated that, if the recommended route is updated during the agricultural process, then the visual representation of the recommended route may be updated accordingly. This provides a human-machine interface that aids a human to perform a more effective agricultural process within the predetermined region.

In some examples, controlling the output user interface comprises providing a visual representation of the predetermined region; and overlaying a visual representation of the recommended route, over the visual representation of the predetermined region, in the form of one or more lines representing the recommended route. This provides an intuitive visual representation of the recommended route for increasing a likelihood of an individual adhering to the recommended route.

In some examples, the position monitoring device is configured to define a position of the agricultural vehicle within a predefined co-ordinate system; and the recommended route defines a recommended path for the agricultural vehicle within the predefined co-ordinate system. This provides a reliable system for defining and monitoring adherence to the recommended route.

The recommended route may comprise one or more location markers each identifying a point of the recommended route with respect to the predetermined co-ordinate system. This provides a reliable and resource-efficient mechanism for storing data that identifies the recommended route.

In some examples, the act of obtaining the boundary information comprises retrieving the boundary information from a database storing a plurality of instances of boundary information for different predetermined regions. Thus, it is not necessary that the guidance control system perform the generation of the boundary information, rather the boundary information may be extracted from a database. Thus, the boundary information may be predefined or precalculated, in order to improve a speed and/or efficiency of generating the recommended route.

In some examples, the act of obtaining the boundary information comprises generating the boundary information by processing satellite imagery of the predetermined region. Thus, the boundary information may still be obtained even if, for example, it is not available in a database.

There is also provided a method for moving an agricultural vehicle within a predetermined region bound by a boundary, the method comprising: obtaining, by a guidance control system, boundary information defining the predetermined region; obtaining, by the guidance control system, tramline information defining a plurality of tramlines present in the predetermined region, wherein the plurality of tramlines comprises at least one pair of parallel tramlines; processing, by the guidance control system, the tramline information to identify the at least one pair of parallel tramlines; generating, by the guidance control system, at least one center line, each center line being a line in the center of, and parallel to, a different one of the at least one pair of parallel tramlines respectively; generating, by the guidance control system, a recommended route for movement of the agricultural vehicle within the predetermined region by processing at least the boundary information and the at least one center line; and during a subsequent performance of the agricultural process by the agricultural vehicle within the region, controlling the travel direction of the agricultural vehicle to follow the recommended route for the agricultural vehicle.

In some examples, the act of controlling the direction of the agricultural vehicle is performed automatically. Alternatively, the act of controlling the direction of the agricultural vehicle may be performed by an operator or user of the agricultural vehicle, i.e., controlled manually.

In some examples, the method further comprises restricting or preventing the performance of an agricultural process by the agricultural vehicle until after the recommended route is available.

There is also provided an agricultural vehicle, comprising: a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information defining the predetermined region; obtain tramline information defining a plurality of tramlines present in the predetermined region, wherein the plurality of tramlines comprises at least one pair of parallel tramlines; process the tramline information to identify the at least one pair of parallel tramlines; generate at least one center line, each center line being a line in the center of, and parallel to, a different one of the at least one pair of parallel tramlines respectively; generate a recommended route for movement of the agricultural vehicle within the predetermined region by processing at least the boundary information and the at least one center line; and during a subsequent performance of the agricultural process by the agricultural vehicle within the region: monitor, using a position monitoring device, the position of the agricultural vehicle with respect to the recommended route; and responsive to a deviation of the monitored position of the agricultural vehicle from the recommended route, update, by the guidance control system, the recommended route.

The guidance control system may be adapted to perform the acts of any herein proposed method, and vice versa.

In some examples, the agricultural vehicle further comprises an output user interface and wherein at least one non-transitory computer-readable storage medium of the guidance control system further comprises instructions that, when executed by the at least one processor, cause the guidance control system guidance control system to provide, on the output user interface, a visual representation of the recommended route.

There is also provided an agricultural vehicle comprising a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information defining the predetermined region; obtain tramline information defining a plurality of tramlines present in the predetermined region, wherein the plurality of tramlines comprises at least one pair of parallel tramlines; process the tramline information to identify the at least one pair of parallel tramlines; generate at least one center line, each center line being a line in the center of, and parallel to, a different one of the at least one pair of parallel tramlines respectively; generate a recommended route for movement of the agricultural vehicle within the predetermined region by processing at least the boundary information and the at least one center line; and during a subsequent performance of the agricultural process by the agricultural vehicle within the region, control the travel direction of the agricultural vehicle to follow the recommended route for the agricultural vehicle.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a flowchart illustrating a proposed method;
FIGS. 2A-2D illustrate an example of a proposed method
FIG. 3 is a flowchart illustrating another proposed method;
FIG. 4 illustrates a system comprising a guidance control system as herein proposed; and
FIG. 5 illustrates an agricultural vehicle comprising a guidance control system as herein proposed.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to at least boundary information, a plurality of generated waylines, and a plurality of generated connecting segments.

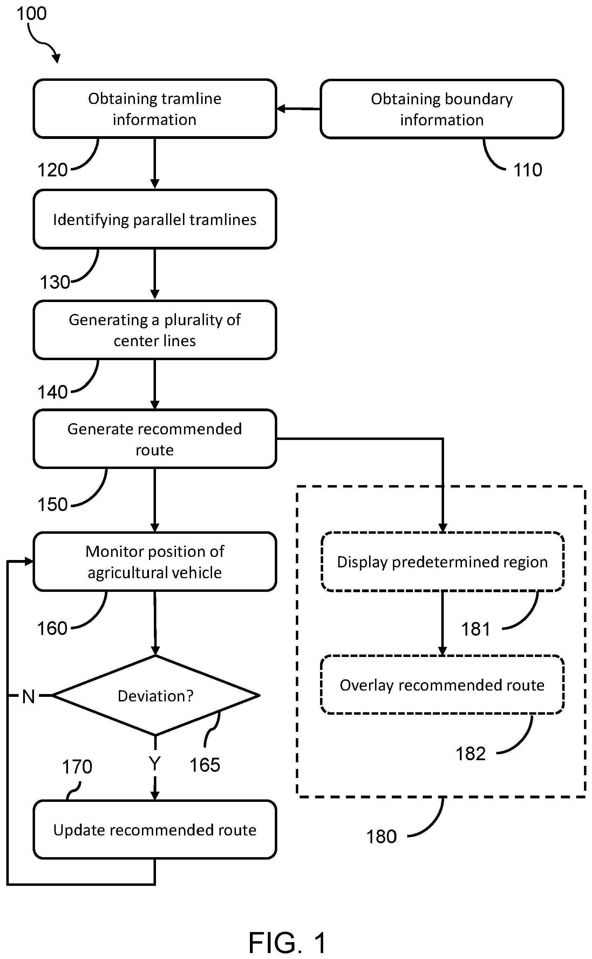

FIG. 1 is a flowchart illustrating a proposed computer-implemented method 100 that is executed, e.g., by a processing system, to perform the proposed approach. In particular, the method 100 is designed for generating a recommended route for an agricultural vehicle to perform an agricultural process within a predetermined region bound by a boundary.

The computer-implemented method 100 comprises an act 110 of obtaining, by a guidance control system, boundary information. The boundary information defines the predetermined region (e.g., a field) using a series (e.g., a set) of connected boundary segments (e.g., linear boundary segments). In other words, the boundary information can comprise information indicating the boundary of the predetermined region using a closed set of (linear and/or curved) boundary segments which are connected end to end.

The boundary information may, for instance, be retrieved from a memory or database. More particularly, the act of obtaining the boundary information may comprise retrieving the boundary information from a database storing a plurality of instances of boundary information for different predetermined regions. In this approach, the boundary information corresponding to the predetermined region is selected. Thus, it is not necessary that the guidance control system perform the generation of the boundary information, rather the boundary information may be extracted from a database. Thus, the boundary information may be predefined or precalculated, in order to improve a speed and/or efficiency of generating the recommended route.

Alternatively, the boundary information can be generated by the guidance control system by, for example, processing satellite imagery of the predetermined region. This can thus allow boundary information to still be obtained even in situations where it is not retrievable from a database.

The computer-implemented method also comprises an act 120 of obtaining, by the guidance control system, tramline information defining the locations of a plurality of tramlines present in the predetermined region, wherein the plurality of tramlines comprises a plurality of pairs of parallel tramlines. For example, a tramline refers to a track or path created in a field by machinery such as an agricultural vehicle, often during seeding/planting. These lanes are left unsown to allow farming equipment, such as tractors or sprayers, to pass through without damaging crops. Tramlines help with precise application of fertilizers, pesticides, and irrigation, improving efficiency and reducing crop damage. To be clear, the tramline information defines where tramlines are present within the predetermined region. In some embodiments, the tramline information may thus take the form of a mask of the predetermined region, indicating if, for a given pixel/location, any part of a tramline is present or not. Of course, as the skilled person would be aware, in other embodiments, the tramline information can take any suitable form.

The plurality of tramlines comprising a plurality of pairs of parallel tramlines can also be understood as the plurality of tramlines comprising at least two sets of two tramlines which are (substantially) parallel to one another (i.e., share the same direction) and paired (e.g., adjacent to one another and/or within a predetermined distance of one another).

In some embodiments, obtaining the boundary information and obtaining the tramline information can happen simultaneously, e.g., in the same act/procedure. For example, by processing satellite imagery of the predetermined region, both boundary information and tramline information could be generated and thus obtained in the same act.

In this embodiment, however, obtaining the tramline information (i.e., act 120) comprises generating the tramline information, by the guidance control system, based on georeferenced data defining a route taken by a past agricultural vehicle. The past agricultural vehicle may be the same as the agricultural vehicle or it may be a different agricultural vehicle - what is important is that the route taken by it, and upon which the tramline information is generated, was taken in the past, i.e., before the obtaining of the tramline information. Georeferenced data for a route taken can be understood as information defining specific geographic coordinates (e.g., latitude and longitude) to points along the route, allowing the route to be accurately mapped and analyzed. Georeferenced data can thus also be referred to as geotagged route data, spatially referenced route information, or GPS-tracked path data. Of course, in other embodiments, the tramline information can be obtained in any suitable way, such as retrieving from a database, using sensing technologies, or, as mentioned above, generated based on satellite imagery.

In this embodiment, the route taken by a past agricultural vehicle is specifically a route of the past agricultural vehicle which resulted in the formation of the plurality of tramline (e.g., the route of an agricultural vehicle using a seed drill or planter). Typically, the tramlines will be symmetrically located in relation to the travel path of the agricultural vehicle which formed them, and this information can thus be used to help generate the tramline information based on the past agricultural vehicle's route. In other words, the route taken by the past agricultural vehicle is a route which at least partially helped form the plurality of tramlines. This approach thus facilitates an efficient, reliable and time-saving way to automatically obtain the tramline information by using data from, for example, a seeding/planting operation performed by an agricultural vehicle in the past which resulted in the formation of the tramlines. In other embodiments, however, this need not be the case and the route taken by the past agricultural vehicle could be, for example, the route of a vehicle which drove next to each of the tramlines after they were already formed.

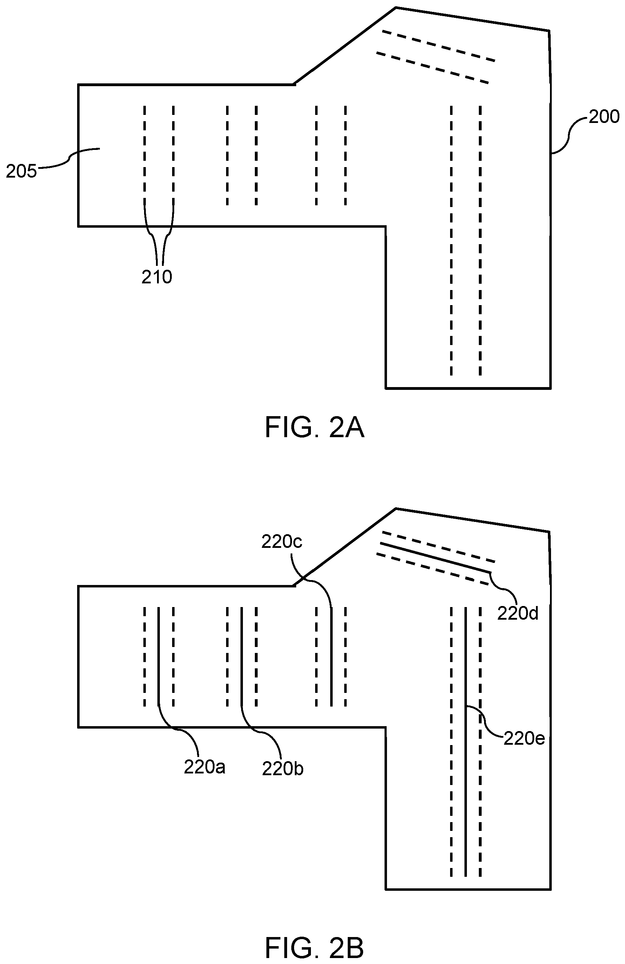

The computer-implemented method also comprises an act 130 of processing, by the guidance control system, the tramline information to identify the plurality of pairs of parallel tramlines. The identification would obviously comprise analyzing the orientation of each tramline to identify parallel tramlines, as well as analyzing the layout of the tramlines to determine pairs (e.g., which tramlines are adjacent to one another and/or within a predetermined distance of one another and/or closer to one another than any other tramlines). For instance, the plurality of tramlines may comprise six tramlines which are all parallel to one another and all spaced apart equally - in this case, the six tramlines would be identified as three pairs of parallel tramlines, wherein each pair comprises two adjacent tramlines. Another example of identifying pairs of parallel tramlines is also shown in relation to FIGS. 2A and 2B, however, the skilled person would appreciate the many ways in which this analysis could be performed and the plurality of pairs of parallel tramlines identified.

The computer-implemented method also comprises an act 140 of generating, by the guidance control system, a plurality of center lines, each center line being a line in the center of, and parallel to, a different one of the plurality of pairs of parallel tramlines respectively. To be clear, the center line should be equidistant between each of the parallel tramlines which make up the pair. In other words, act 140 can be understood as generating a center line for each of the plurality of pairs of parallel tramlines which is in the center of, and parallel to, said pair, such that a plurality of center lines are generated. The length of the center line is typically the same as the length of each of the tramlines of the pair which it is in the center of, however, in some embodiments, the length of the center line can be adjusted / deviate from the length of its tramlines.

The computer-implemented method 100 also comprises an act 150 of generating, by the guidance control system, a recommended route for movement of the agricultural vehicle within the predetermined region by processing at least the boundary information and the plurality of center lines. For example, in some embodiments, the recommended route can be generated by essentially combining the plurality of center lines (e.g., using connecting segments and/or via straight lines) while ensuring that the recommended route stays within the predetermined region (defined by the boundary information).

The recommended route may be defined with respect to a predetermined spatial co-ordinate system, such as a global or geographic co-ordinate system (e.g., longitude and latitude), a region/local co-ordinate system (e.g., a trilaterated/triangulated position) or a relative co-ordinate system, such as one defined with respect to the boundary of the predetermined region.

The boundary information may indicate or be processed to derive one or more constraints or boundary conditions on the generation of the recommended route. The recommended route may be generated to adhere to any such constraints.

For instance, one or more machine-learning algorithms may be appropriately configured and/or trained for generating a recommended route for movement of the agricultural vehicle within the predetermined region by processing at least the boundary information and the plurality of center lines. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. One widely used learning approach is known as a supervised learning approach, which makes use of a large database of known input and output data. In such techniques, the machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

It is not essential that the machine learning algorithm(s) be trained by the guidance control system. Rather, the machine-learning algorithm(s) may be trained in advance of their usage (i.e., exploitation for performing inference) by the guidance control system. More specifically, the machine-learning algorithm(s) may be trained by a dedicated training processing system, such as a cloud-based processing system.

In some embodiments, the method 100 may further comprise (e.g., in between acts 140 and 150) generating, by the guidance control system, a plurality of connecting segments for connecting the generated plurality of center lines together. In other words, the plurality of connecting segments can be for connecting an end of each center line to at least one other (preferably, end of a) center line such that all center lines end up connecting to at least one other center line via a connecting segment. In yet other words, the plurality of connecting segments can be generated such that the center lines are connected together via one or more connecting segments, each connecting segment being connected to an end of one center line and an end or middle position of a different center line. In these embodiments, generating the recommended route in act 150 can then be performed by further processing the plurality of connecting segments.

In some embodiments, for example, where the plurality of connecting segments are generated to connect each center line to every other center line, the recommended route may include only the minimum number of connecting segments needed to allow the agricultural vehicle to traverse every center line. The skilled person would appreciate the myriad ways in which the plurality of connecting segments and plurality of center lines could be combined and/or utilized in order to generate a recommended route.

In a simple example, the connecting segments may comprise straight lines between ends of different center lines. In this embodiment, however, each of the plurality of connecting segments actually comprise a smooth curved segment. Smooth curved segments provide effective connecting segments which agricultural vehicles can effectively and easily follow.

It should be noted that in some embodiments, each segment of the recommended route (e.g., center line, connecting segment, etc.) can have a cost associated with it, such as travel distance, estimated time to travel, soil compaction, and these costs can be used during the generation of the recommended route to find an optimal recommended route which minimizes one or more of these costs (as well as if the route is interrupted, to calculate the new recommended route).

The computer-implemented method also comprises performing further acts 160 and 170, which are only performed during a subsequent (to act 150) performance of the agricultural process.

Act 160 comprises monitoring, using a position monitoring device, the position of the agricultural vehicle with respect to the recommended route. Act 160 may be performed by the guidance control system communicating or otherwise interacting with the position monitoring device to monitor the position of the agricultural vehicle.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The monitored/tracked position of the agricultural vehicle may be defined in the same spatial co-ordinate system as the recommended route. Where appropriate or required, this may comprise perform a spatial transformation of the monitored/tracked position and/or the recommended route so that both sets of data lie in a same spatial co-ordinate system, i.e., share a same spatial co-ordinate system. Approaches for performing such a technique are well known in the art, particularly as the relationship between different spatial co-ordinate systems can be readily defined.

Put another way, the position monitoring device may be configured to define a position of the agricultural vehicle within a predefined co-ordinate system. The recommended route defines a recommended path for the agricultural vehicle within the predefined co-ordinate system.

Act 170 comprises, responsive to a deviation of the monitored position of the agricultural vehicle from the recommended route, updating, by the guidance control system, the recommended route.

Thus, act 170 may comprise a sub-act 165 of determining whether or not that there is a deviation from the monitored position of the agricultural vehicle from the recommended route. Sub-act 165 may be performed by the guidance control system and/or the position monitoring system.

One approach to performing act 165 is to determine a shortest distance (e.g., in the shared spatial co-ordinate system) between the monitored position and the recommended route. Responsive to the determined distance breaching/exceeding a predetermined threshold (e.g., representing a spatial distance of no less than 1 m), then act 165 may determine that there is a deviation from the recommended route. Responsive to the determined distance failing to breach/exceed a predetermined threshold (e.g., representing a spatial distance of no less than 1 m), then act 165 may determine that there is no deviation from the recommended route.

Responsive to a positive determination in sub-act 165 (i.e., when a deviation is detected), the method 100 moves to a sub-act 170 of updating the recommended route. Sub-act 170 may be performed, for instance, by effectively repeating the procedure performed in act 150 - but with a modified version of the boundary of the region of interest. In particular, the boundary may be moved such that the predetermined region no longer contains any part of the region that has undergone the agricultural procedure.

In some examples, the recommended route comprises one or more location markers each identifying a point of the recommended route with respect to the predetermined co-ordinate system. This provides a mechanism for coherently and reliably defining the recommended route using a relatively small amount of data.

Optionally, the method 100 further comprises an act 180 of controlling an output user interface to provide a visual representation of the recommended route. Approaches for controlling an output user interface (e.g., a display or screen) to provide a visual representation of a data element will be readily apparent to the skilled person.

As a working example, act 180 may comprise a sub-act 181 of controlling the output user interface to provide a visual representation of the predetermined region. This may be performed, for example, by using the boundary information to define the shape of the predetermined region. As an alternative example, this may be performed by using an aerial photograph (e.g., a satellite image) of the predetermined region.

In this working example, act 180 may further comprise a sub-act 182 of overlaying a visual representation of the recommended route, over the visual representation of the predetermined region. The visual representation of the recommended route may take the form of one or more lines representing the recommended route.

Sub-act 182 can be trivially performed if the spatial relationship between the predetermined region and the recommended route is known, e.g., they are defined in a same spatial co-ordinate system. In particular, the global position of an area represented in an aerial photograph, such as a satellite image, is known or determinable when the aerial photograph is taken. If the recommended route can be defined using similar geographic position information, then a visual representation of the recommended route can be trivially overlaid upon the visual representation of the predetermined region.

Although not illustrated in FIG. 1, the method 100 may comprise, during the agricultural procedure, controlling (using a vehicle control device) a movement of the agricultural vehicle to follow the recommended route. This may be performed by monitoring the position of the agricultural vehicle (e.g., using any previously described approach) and controlling the steering of the agricultural vehicle such that the monitored position follows the recommended route.

In this way, the method 100 may comprise the requirement that: controlling the direction of the agricultural vehicle is performed automatically.

Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

Alternatively, controlling the movement of the agricultural vehicle may be performed or controlled by a human operator of the agricultural vehicle, e.g., performing a manual control of the travel direction(s) (and speed) of the agricultural vehicle using any known vehicle control mechanism (e.g., a steering wheel or the like). In such approaches, the method 100 may thus comprise controlling an output user interface to provide a visual representation of the recommended route (example approaches for which have been previously described) and controlling, by the human operator, the travel direction of the agricultural vehicle responsive to the recommended route.

In summary, modern farming machinery often support various types of navigation equipment (guidance systems/controllers) that allow the machinery to be computer controlled to follow predetermined paths (guidance lines / guidance patterns / waylines) or at least to guide a human operator to do so. For example, these can be created both on the machine operating in the field (predetermined region) utilizing machine movements or pre-recorded polygons representing a boundary, or on other computing devices. In some cases, a seeding/planting implement has been used to mark special tracks within a field (tramlines) which have been left unplanted/unseeded. These tracks (tramlines) are intended to be used during subsequent operations to reduce crop damage during these operations. While the initial seeding/planting operation can be carried out using guidance patterns, there is no easy way for the machine operator to convert these tramlines (typically consisting of two tracks per travel path, often symmetrically located in relation to the original travel path) into a new guidance pattern with the correct replication pattern for the subsequent operation. In addition to this, the tramlines are often used for crop care which occurs multiple times during a crop cycle where these are to be traversed using the same pattern.

The present disclosure thus aims to provide methods for creating recommended routes (e.g., guidance patterns) from previously created tramlines (e.g., created by application implements, typically seeding and planting implements with section control). The recommended route (e.g., an in-field route) is intended to traverse all center lines generated from the pairs of tramlines (e.g., to traverse all replications of the guidance patterns derived from the tramlines) while including any types of turns that are required to connect the centerlines (within the appropriate area, i.e., within the predetermined region).

In an example of the present disclosure, a method begins with analyzing tramlines present within a field to find and group parallel tramlines that have a constant spacing (and so, for example, can be assumed to be pairs of tramlines which were formed at the same time, typically symmetrically either side of an agricultural vehicle). For each pair of tramlines, a center line can then be calculated. These center lines can then themselves be grouped if parallel and with a constant spacing between them. A guidance pattern can then be extracted for each group, for example, consisting of: a line segment, a line width (spacing), the number of replications, and the bounding box of the tramlines from which they were derived. It should be noted that the initially used tramlines can be placed anywhere within the predetermined region (e.g., field) but typically they are either placed in the headland of the field or the primary area of the field. However, the tramlines could also be distributed across sub-fields or across multiple fields.

The skilled person would know that the headland is the area around the perimeter of a field which is typically used by vehicles for turning and maneuvering whereas the primary area is the main body of the field where agricultural procedures (such as harvesting/planting) actually take place, typically in parallel lines.

Guidance patterns can be utilized in guidance controllers (e.g., in the agricultural machines that will be carrying out the subsequent agricultural procedure, such as crop care or nutrient application). In addition to the guidance pattern generation, the present disclosure also involves generating a complete travel path that passes through all replications of the guidance patterns (i.e., all the center lines) including any turns required while respecting the agricultural vehicle's machine kinematics. For example, this can be created by using all the generated center lines and connecting them using a predetermined pattern, e.g., inserting turns between closest parallel center lines). These turns can be generated while respecting the predetermined boundary or, for example, by allowing a boundary crossing if a road or field is located near the predetermined boundary (i.e., that the agricultural vehicle can drive on). It is a preference that turns are generated in a way which includes any other nearby center line segments. For example, in a situation where there are two center lines parallel to one another which have a perpendicular center line connecting them at the end, the turns from one center line should go to the perpendicular center line and then on to the second center line - in other words, it is preferable to optimize the recommended route such that the proportion of the route which passes through the center lines is as great as possible.

The final recommended route can be expressed as a spline guidance pattern with no replication. A spline guidance pattern is a smooth, curved path generated to guide agricultural machinery through, for example, irregularly shaped fields, following a continuous, flowing line. It minimizes abrupt changes in direction, making it ideal for fields with complex contours or obstacles.

In addition, the recommended route can contain markers indicating where the initial tramlines were identified, facilitating automatic machine control of implements on the agricultural vehicle to allow for, for example, automatic engaging and disengaging of the discharge of material. It should be noted that this could also be done implicitly by communicating what parts of the predetermined region are headland and having an onboard system detect the crossing of a headland boundary - this embodiment, however, would only facilitate fully automatic machine control of the implement discharge for the primary area.

FIG. 2A illustrates the start of an example of a proposed method according to the present disclosure. Specifically, FIG. 2A illustrates an example of boundary information 200 such as that obtained in act 110 of method 100. For example, the boundary information 200 comprises a series of connected linear boundary segments, thus forming a rectangle. Together, the linear boundary segments thus define a predetermined region 205, for example, a field.

Present in the predetermined region 205 are a plurality of tramlines 210. As can be seen, in the present example, there are five pairs of parallel tramlines 210. For example, these pairs can be identified by calculating the distances between each tramline and their nearest neighbors and then determining pairs accordingly. Whether or not the pairs are substantially parallel or not can be determined by analyzing the orientation of each tramline.

In FIG. 2B, a center line, 220a-220e, has been generated for each pair of parallel tramlines, thus resulting in the generation of five center lines. As can be seen, each center line, 220a-220e, is in the center of its corresponding pair of tramlines (i.e., equidistant between them), and parallel to them as well as sharing the same length.

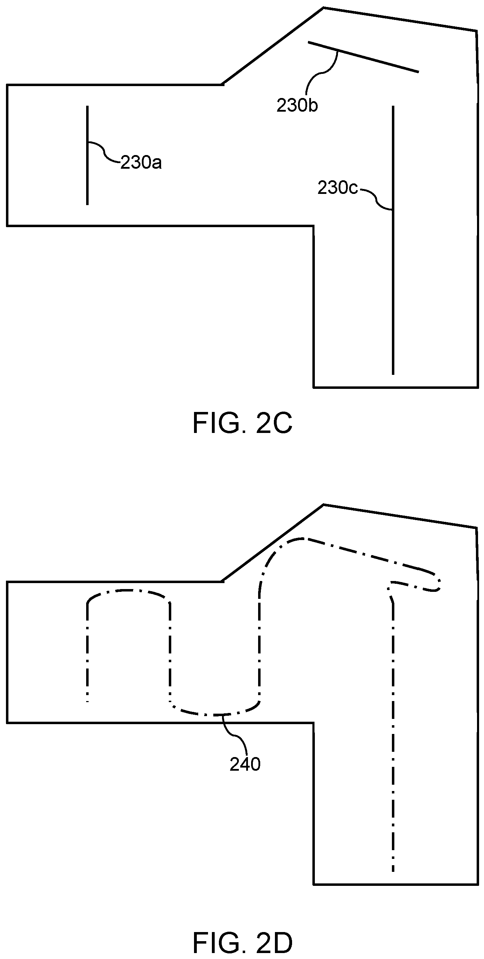

In FIG. 2C, the plurality of center lines, 220a-220e, have been grouped into three groups based on their orientation and spacing; first, center lines 220a-220c; second, center line 220d; and third, center line 220e. For each group, a guidance pattern, 230a-230c, has been generated, the guidance pattern essentially being a compressed description of the center lines within said group, and for example, comprising: a line length, a line spacing, a spacing direction, and a number of replications. For example, center lines 230a-230c have been converted into guidance pattern 230a. As can be seen in FIG. 2C, a line length and line orientation is provided, but also provided in the guidance pattern (but not shown) is the fact that the line in guidance pattern 230a is replicated twice (resulting in a total of three center lines) to the right (in the orientation of FIG. 2C) and there is a certain spacing between them. As the second and third groups only contain one center line each (220d and 220e respectively), the guidance pattern merely comprises the single center line itself (i.e., 230b and 230c respectively), i.e., no replications and therefore no line spacing, spacing direction, etc.

In FIG. 2D, a recommended route 240 has been generated by essentially combining the guidance patterns, 230a-230c, or the original center lines, 220a-220e (i.e., by essentially skipping from 2B to 2D). To be clear, the recommended route 240 is purely provided as an example and is not supposed to be indicative of a preferred or optimal recommended route. As can be seen, the center lines, 220a-220e, have been connected together via smooth, curved connecting segments. For example, an end of each center line is connecting an end of an adjacent center line such that a continuous route is provided which efficiently passes through all of the center lines.

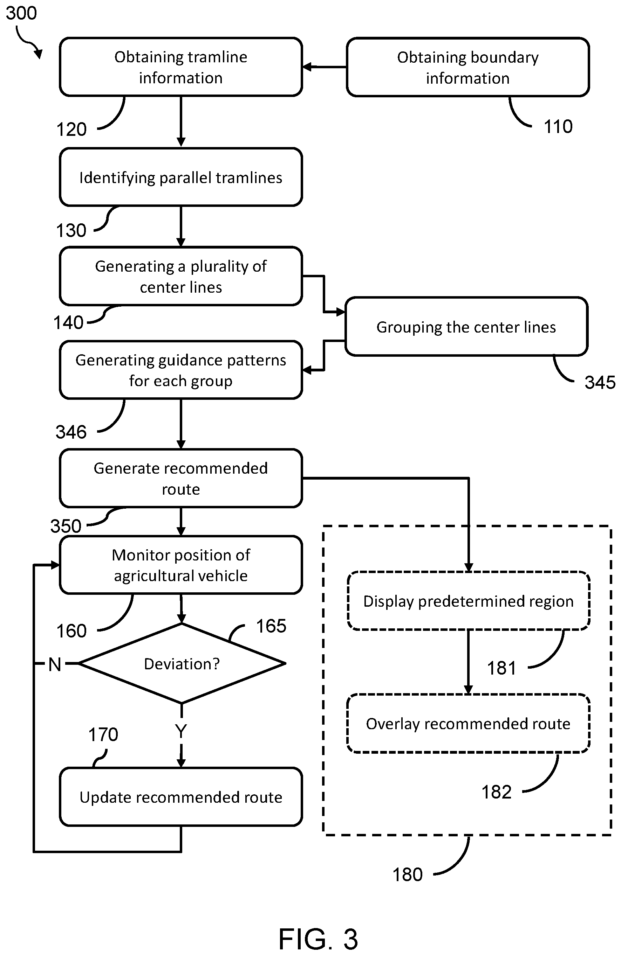

FIG. 3 a flowchart illustrating another proposed computer-implemented method 300. Acts 110, 120, 130, 140, 160, 165, 170, 180, 181 and 182 are substantially the same as have been described in relation to method 100 of FIG. 1.

Act 345 comprises grouping the plurality of center lines into a plurality of groups based on at least one of: an orientation of the center lines; and a spacing between the lines. For example, preferably, the plurality of center lines are grouped such that each group comprises pairs of tramlines which are parallel to one another and have a substantially constant spacing between them. Of course, a group can contain a single pair of tramlines if there are no other pairs which it is parallel with (as was seen in FIGS. 2B-2C).

In act 346, a guidance pattern is generated for each of the plurality of groups such that a plurality of guidance patterns are generated. For example, a guidance pattern can be understood as a set of information which allows the generation of the group of center lines on which it was based, essentially facilitating a compression of the information defining each center line in the group. For example, an effective set of information for the guidance pattern to comprise is: a line length; a line orientation; a line spacing (i.e., a spacing between the center lines in the group); a spacing direction (e.g., defined with respect to a predetermined spatial co-ordinate system); and a number of replications. In some embodiments, the guidance pattern can further comprise an origin location (i.e., location of the first center line from which the further replications will be calculated). Of course, if the group of center lines only consists of a single center line, then the guidance pattern need only comprise: line length; and line orientation (as well as, of course, location). It should be noted that in some embodiments, the guidance pattern may further comprise a bounding box of the tramlines from which the guidance pattern was derived. Guidance patterns are widely used and so compatible with many established navigation systems, thus facilitating a wider use of the method of the present disclosure.

In act 350, the recommended route is thus generated by processing at least the boundary information and the plurality of guidance patterns (i.e., to thereby generate a recommended route which passes through all the center lines described by the guidance patterns).

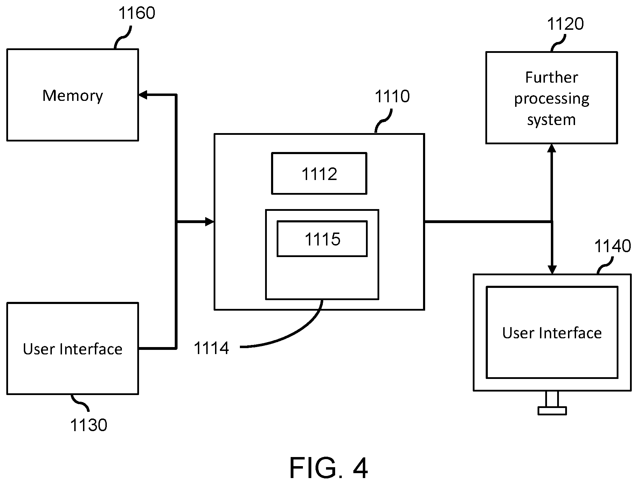

FIG. 4 illustrates an example of system 1100 in which embodiments may be employed.

The guidance control system comprises a guidance control system 1110, which is itself an embodiment of the disclosure, a position monitoring device 1120, an (optional) input user interface 1130, and an (optional) output user interface 1140.

The guidance control system 1110 is configured to perform and/or co-ordinate the performance of any previously disclosed act that is identified as being performed by or using the guidance control system.

In particular examples, the guidance control system 1110 may perform the acts of: obtaining, by a guidance control system, boundary information defining the predetermined region; obtaining, by the guidance control system, tramline information defining the locations of a plurality of tramlines present in the predetermined region, wherein the plurality of tramlines comprises a plurality of pairs of parallel tramlines; processing, by the guidance control system, the tramline information to identify the plurality of pairs of parallel tramlines; generating, by the guidance control system, a plurality of center lines, each center line being a line in the center of, and parallel to, a different one of the plurality of pairs of parallel tramlines respectively; generating, by the guidance control system, a recommended route for movement of the agricultural vehicle within the predetermined region by processing at least the boundary information and the plurality of center lines; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In some examples, the guidance control system 1110 may perform acts of: obtaining, by a guidance control system, boundary information defining the predetermined region; obtaining, by the guidance control system, tramline information defining the locations of a plurality of tramlines present in the predetermined region, wherein the plurality of tramlines comprises a plurality of pairs of parallel tramlines; processing, by the guidance control system, the tramline information to identify the plurality of pairs of parallel tramlines; generating, by the guidance control system, a plurality of center lines, each center line being a line in the center of, and parallel to, a different one of the plurality of pairs of parallel tramlines respectively; generating, by the guidance control system, a recommended route for movement of the agricultural vehicle within the predetermined region by processing at least the boundary information and the plurality of center lines; and during a subsequent performance of the agricultural process by the agricultural vehicle within the region, controlling the travel direction of the agricultural vehicle to follow the recommended route for the agricultural vehicle.

More specifically, the guidance control system 1110 may comprise at least one processor 1112 and at least one non-transitory computer-readable storage medium 1114 storing instructions 1115 thereon that, when executed by the at least one processor, cause the guidance control system to perform any previously disclosed act that is identified as being performed by or using the guidance control system.

The skilled person would be readily capable of developing a guidance control system for carrying out any herein described method. Thus, each act of the flow chart may represent a different action performed by a guidance control system and may be performed by a respective module of the guidance control system.

The position monitoring device 1120 is configured to monitor the position of an agricultural vehicle during the performance of an agricultural process. Approaches for monitoring the position of a vehicle are well known in the art, some of which have been previously described in detail. The function or operation of the position monitoring system may be controlled by and/or responsive to instructions/communications from the guidance control system.

The guidance control system 1110 and the position monitoring device 1120 are configured to communicate with one another over any wired/wireless medium, e.g., an ethernet cable, using any suitable or known communication protocol.

The input user interface 1130 may be adapted to receive one or more inputs from a user or operator. The input(s) may, for instance, be used to define one or more properties or parameters used in one or more of the herein disclosed methods.

The output user interface 1140 may be adapted to provide a visual representation of the predetermined region and/or the recommended route. In particular, the guidance control system 1110 may communicate with the output user interface (e.g., embodiable as a screen or display) to provide such a visual representation.

The system 1100 may further comprise a memory 1160 configured to store one or more instances of boundary information. The guidance control system may be configured to obtain one of the one or more instances of boundary information from the memory 1160. More particularly, the memory or database may store a plurality of instances of boundary information for different predetermined regions. In this approach, the boundary information corresponding to the predetermined region is selected from the database, i.e., by selecting the boundary information corresponding to the relevant predetermined region.

There is also provided an agricultural vehicle comprising any herein disclosed guidance control system 1110 and (where appropriate) the position monitoring system.

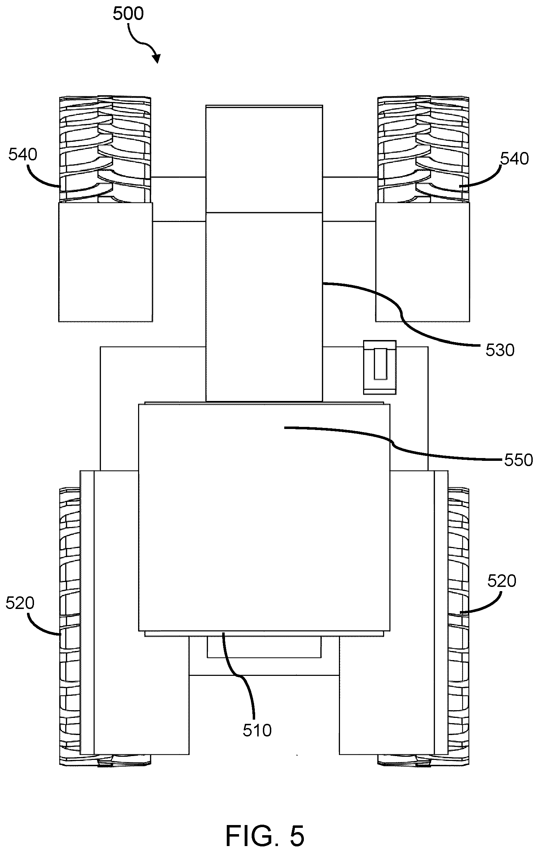

FIG. 5 illustrates an agricultural vehicle 500 comprising a guidance control system 550 as herein proposed.

For example, the agricultural vehicle 500 comprises a cabin 510; rear wheels 520; a hood 530; and front wheels 540. In this example, the guidance control system 550 (not shown) is situated in the cabin 510, but in other embodiments, the guidance control system 550 can be situated in any suitable place within the agricultural vehicle. In some embodiments, where appropriate, the agricultural vehicle 500 may further comprise a position monitoring system (as described above). For example, the position monitoring system may also be situated in the cabin 510.

The guidance control system 550 may comprise at least one processor (not shown); and at least one non-transitory computer-readable storage medium (not shown) storing instructions thereon that, when executed by the at least one processor, cause the guidance control system 550 to perform any herein-disclosed method.

In particular examples, the guidance control system 550 may perform the acts of: obtaining, by a guidance control system, boundary information defining the predetermined region; obtaining, by the guidance control system, tramline information defining the locations of a plurality of tramlines present in the predetermined region, wherein the plurality of tramlines comprises a plurality of pairs of parallel tramlines; processing, by the guidance control system, the tramline information to identify the plurality of pairs of parallel tramlines; generating, by the guidance control system, a plurality of center lines, each center line being a line in the center of, and parallel to, a different one of the plurality of pairs of parallel tramlines respectively; generating, by the guidance control system, a recommended route for movement of the agricultural vehicle within the predetermined region by processing at least the boundary information and the plurality of center lines; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In some examples, the guidance control system 550 may perform acts of: obtaining, by a guidance control system, boundary information defining the predetermined region; obtaining, by the guidance control system, tramline information defining the locations of a plurality of tramlines present in the predetermined region, wherein the plurality of tramlines comprises a plurality of pairs of parallel tramlines; processing, by the guidance control system, the tramline information to identify the plurality of pairs of parallel tramlines; generating, by the guidance control system, a plurality of center lines, each center line being a line in the center of, and parallel to, a different one of the plurality of pairs of parallel tramlines respectively; generating, by the guidance control system, a recommended route for movement of the agricultural vehicle within the predetermined region by processing at least the boundary information and the plurality of center lines; and during a subsequent performance of the agricultural process by the agricultural vehicle within the region, controlling the travel direction of the agricultural vehicle to follow the recommended route for the agricultural vehicle.

It will be understood that disclosed methods are preferably computer-implemented methods. As such, there is also proposed the concept of a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for generating a recommended route for an agricultural vehicle to perform an agricultural process within a predetermined region bound by a boundary, the computer-implemented method comprising:
obtaining, by a guidance control system, boundary information defining the predetermined region;
obtaining, by the guidance control system, tramline information defining the locations of a plurality of tramlines present in the predetermined region, wherein the plurality of tramlines comprises a plurality of pairs of parallel tramlines;
processing, by the guidance control system, the tramline information to identify the plurality of pairs of parallel tramlines;
generating, by the guidance control system, a plurality of center lines, each center line being a line in the center of, and parallel to, a different one of the plurality of pairs of parallel tramlines respectively;
generating, by the guidance control system, a recommended route for movement of the agricultural vehicle within the predetermined region by processing at least the boundary information and the plurality of center lines; and
during a subsequent performance of the agricultural process by the agricultural vehicle within the region:
monitoring, using a position monitoring device, the position of the agricultural vehicle with respect to the recommended route; and
responsive to a deviation of the monitored position of the agricultural vehicle from the recommended route, updating, by the guidance control system, the recommended route.

2. The computer-implemented method of claim 1, wherein generating the recommended route comprises:
grouping the plurality of center lines into a plurality of groups based on at least one of: an orientation of the center lines; and a spacing between the center lines; and
generating a guidance pattern for each of the plurality of groups such that a plurality of guidance patterns are generated; and
generating the recommended route by processing at least the boundary information and the plurality of guidance patterns.

3. The computer-implemented method of claim 2, wherein a guidance pattern comprises: a line length; a line orientation; a line spacing; a spacing direction; and a number of replications.

4. The computer-implemented method of claim 2 or 3, wherein grouping the plurality of center lines comprises grouping the plurality of center lines into a plurality of groups such that each group consists of a single center line or a plurality of center lines which are parallel to one another and have a substantially constant spacing between them.

5. The computer-implemented method of any of claims 1 to 4, further comprising:
generating, by the guidance control system, a plurality of connecting segments for connecting the generated plurality of center lines together; and
wherein generating the recommended route is performed by further processing the plurality of connecting segments.

6. The computer-implementation method of claim 5, wherein each of the plurality of connecting segments comprise a smooth curved segment.

7. The computer-implemented method of any of claims 1 to 6, wherein obtaining the tramline information comprises generating the tramline information, by the guidance control system, based on georeferenced data defining a route taken by a past agricultural vehicle.

8. The computer-implemented method of claim 7, wherein the route taken by the past agricultural vehicle is the route of the past agricultural vehicle which resulted in the formation of the plurality of tramlines.

9. The computer-implemented method of any of claims 1 to 8, further comprising controlling an output user interface to provide a visual representation of the recommended route.

10. The computer-implemented method of claim 9, wherein controlling the output user interface comprises:
providing a visual representation of the predetermined region; and
overlaying a visual representation of the recommended route, over the visual representation of the predetermined region, in the form of one or more lines representing the recommended route.

11. The computer-implemented method of any of claims 1 to 10, wherein:
the position monitoring device is configured to define a position of the agricultural vehicle within a predefined co-ordinate system; and
the recommended route defines a recommended path for the agricultural vehicle within the predefined co-ordinate system.

12. The computer-implemented method of claim 11, wherein the recommended route comprises one or more location markers each identifying a point of the recommended route with respect to the predetermined co-ordinate system.

13. The computer-implemented method of any one of claims 1 to 12, wherein the act of obtaining the boundary information comprises retrieving the boundary information from a database storing a plurality of instances of boundary information for different predetermined regions.

14. An agricultural vehicle, comprising:
a guidance control system configured to control one or more operations of the agricultural vehicle and comprising:
at least one processor; and
at least one non-transitory computer-readable storage medium storing instructions thereon that, when executed by the at least one processor, cause the guidance control system to:
obtain boundary information defining the predetermined region;
obtain tramline information defining a plurality of tramlines present in the predetermined region, wherein the plurality of tramlines comprises at least one pair of parallel tramlines;
process the tramline information to identify the at least one pair of parallel tramlines;
generate at least one center line, each center line being a line in the center of, and parallel to, a different one of the at least one pair of parallel tramlines respectively;
generate a recommended route for movement of the agricultural vehicle within the predetermined region by processing at least the boundary information and the at least one center line; and
during a subsequent performance of the agricultural process by the agricultural vehicle within the region:
monitor, using a position monitoring device, the position of the agricultural vehicle with respect to the recommended route; and
responsive to a deviation of the monitored position of the agricultural vehicle from the recommended route, update, by the guidance control system, the recommended route.

15. The agricultural vehicle of claim 14, further comprising:
an output user interface; and
wherein at least one non-transitory computer-readable storage medium of the guidance control system further comprises instructions that, when executed by the at least one processor, cause the guidance control system guidance control system to provide, on the output user interface, a visual representation of the recommended route.
